# EUROPÄISCHE PATENTSCHRIFT

(11) **EP 3 196 649 B1**
(45) Veröffentlichungstag und Bekanntmachung des Hinweises auf die Patenterteilung: **18.08.2021**
(21) Anmeldenummer: 16152386.5
(22) Anmeldetag: 22.01.2016
(51) Int. Cl.: G01N 35/00, G01N 35/04, G01D 5/06, G01D 5/14, G01N 35/10

(54) **JUSTAGESYSTEM**
ADJUSTMENT SYSTEM
SYSTEME D'AJUSTEMENT

(43) Veröffentlichungstag der Anmeldung: 26.07.2017
(73) Patentinhaber: Siemens Healthcare Diagnostics Products GmbH, 35041 Marburg (DE)
(72) Erfinder: Korn, Matthias, 56355 Nastaetten (DE); Anderle, Klaus, 61476 Kronberg (DE)

(56) Entgegenhaltungen:
- US-A1- 2011 086 432
- US-A1- 2012 227 471
- US-A1- 2014 065 017
- US-A1- 2015 285 831

## Beschreibung

Die Erfindung liegt auf dem Gebiet der automatischen in vitro-Diagnostiksysteme. Gegenstand der Erfindung ist ein Verfahren zur Justage eines automatisch arbeitenden Analysators zur Untersuchung von biologischen Körperflüssigkeiten.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Ein Beispiel für ein Analysegerät mit gesteuertem Transferarm mit Greiffunktion ist in US 2011/086432 A1 offenbart. Für Proben, Reagenzien und auch für die eigentliche Nachweisreaktion werden geeignete, auch als Küvetten bezeichnete, Gefäße verwendet. Diese umfassen üblicherweise eine geschlossene Umwandung sowie eine gegebenenfalls verschließbare Öffnung zur Aufnahme der jeweils zu analysierenden Flüssigkeit. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Bei heutigen automatisch arbeitenden Analysatoren, die zur Untersuchung von biologischen Körperflüssigkeiten eingesetzt werden, können die benötigten Reagenzien mittels einer Pipettiervorrichtung mit einer Pipettiernadel in eine Meßküvette eingefüllt werden. Die Meßküvette wird dabei mit einem Küvettengreifer innerhalb des automatischen Analysegerätes zu verschiedenen Positionen mittels eines Roboterarms automatisch verfahren, der Teil einer Roboterstation ist. Nach der Messung wird die benutzte Meßküvette zur Entsorgung durch einen Abfallschacht in einen Abfallbehälter verbracht. An Küvettengreifer und/oder am Roboterarm kann ein Sensor vorgesehen sein, mit dessen Hilfe Krafteinwirkungen auf den Küvettengreifer oder die Meßküvette gemessen werden können.

Bei der Montage eines automatisch arbeitenden Analysators bleibt stets eine gewisse Ungenauigkeit hinsichtlich der Positionierung insbesondere der Robotorarme und sonstigen Transfer- und Positioniersysteme bestehen. Da diese jedoch für den automatisierten Ablauf und das genaue Zusammenwirken exakte Positionierungsdaten benötigen, ist eine exakte Justage notwendig. Diese kann entweder manuell mit Hilfe von Justagemarken, wie in US 2012/227471 A1, US 2014/065017 A1 oder US 2015/285831 A1 dargestellt, hochpräzise gefertigten Justagewerkzeugen und/oder automatisch erfolgen.

Für die automatische Justage ist üblicherweise zunächst ein entsprechender Sensor am Antrieb des jeweils zu justierenden beweglichen Elements des Transfersystems, z.B. an einem Teil eines Transferarms vorhanden, der an die Steuereinheit Informationen über die aktuelle Position des Antriebs weitergibt. Der Transferarm wird dann von der Steuereinheit kontrolliert auf eine spezielle, z.B. im Gerät fest montierte Justagemarke zubewegt. Bekannte Justagesysteme funktionieren häufig auf kapazitiver Basis, wobei als Kontaktelement eine Nadel an dem beweglichen Element auf eine kleine Metalloberfläche an der Justagemarke geführt wird. Wird eine Berührung erkannt, speichert die Steuereinheit die zugehörige Position des Antriebs ab. Bei anderen bekannten Justagesystemen ist das Kontaktelement mittels eines Gelenkelements an dem bewegbaren Element angeordnet, wobei das Gelenkelement selbstrückstellend ausgestaltet ist, und wobei einem Abstand zwischen Kontaktelement und bewegbarem Element ein Abstandsmesssensor zugeordnet ist.

Relativ zur Position der Justagemarke werden weitere Baugruppen im Gerät, wie z.B. Aufnahmepositionen für Flüssigkeitsgefäße dann entsprechend angeordnet. Letztlich müssen die Transfersysteme und die Aufnahmepositionen entsprechend präzise relativ zueinander justiert sein, damit z.B. Flüssigkeitsgefäße von einer Aufnahmeposition auf einer Baugruppe zu einer anderen Aufnahmeposition auf einer anderen Baugruppe transferiert werden können. Dabei kann das Anbringen der Justagemarke sowie die Vermessung der Position der Justagemarke relativ zur Position von z.B. Aufnahmepositionen sehr Zeit- und Kostenaufwändig sowie fehleranfällig sein. Auch kann es im Betrieb des Geräts zu Veränderungen der relativen Position der Justagemarke und der Aufnahmepositionen kommen, was eine erneute, aufwändige Justage und Vermessung des Geräts notwendig machen kann.

Es ist daher Aufgabe der Erfindung, ein Justageverfahren zur Verfügung zu stellen, mit dem der Zeit- und Kostenaufwand für Justagen verringert werden kann und das keine zusätzlichen Justagemarken benötigt.

### Diese Aufgabe wird erfindungsgemäß durch die im Folgenden beschriebenen Verfahren und Gegenstände gelöst.

Es wurde gefunden, dass ein verbessertes Verfahren zur Justierung einer an einem robotisch verfahrbaren Transferarm befestigten Transfervorrichtung mit einer Halterung für ein Flüssigkeitsgefäß in einem automatischen Analysegerät, wobei die Transfervorrichtung mit Hilfe des Transferarms bewegt werden kann, mittels der im folgenden beschriebenen Schritte erreicht werden kann:
a) Aufnahme eines Flüssigkeitsgefäßes in die Halterung,
b) Messung einer ersten Krafteinwirkung auf die Halterung mit aufgenommenen Flüssigkeitsgefäß mit Hilfe eines Sensors,
c) Verfahren des Flüssigkeitsgefäßes in eine vorgegebene Position in einer vorgegebenen Höhe in einer Aufnahmeposition für das Flüssigkeitsgefäß mit Hilfe des robotisch verfahrbaren Transferarms, und Messung einer zweiten Krafteinwirkung auf die Halterung mit aufgenommenen Flüssigkeitsgefäß mit Hilfe des Sensors,
d) Vergleich der in Schritt b) und Schritt c) gemessenen Krafteinwirkungen,
wobei, wenn die in Schritt b) und Schritt c) gemessenen Krafteinwirkungen nicht mehr als ein vorgegebenes Maß voneinander abweichen, die Transfervorrichtung bezüglich der Aufnahmeposition hinreichend justiert ist, und
wobei, wenn die in Schritt b) und Schritt c) gemessenen Krafteinwirkungen mehr als ein vorgegebenes Maß voneinander abweichen, eine Justierung der Transfervorrichtung bezüglich der Aufnahmeposition erfolgt.

Dies hat den Vorteil, dass abgesehen von der Halterung für das Flüssigkeitsgefäß selbst keine zusätzliche Justagemarke vorgesehen sein muss. Dies kann zu erheblichen Zeit- und Kostenersparnissen führen. Weiter kann dies zu einer erheblich reduzierten Fehleranfälligkeit des Analyzers führen. Auch kann mittels des erfindungsgemäßen Verfahrens im laufenden Betrieb des Analyzers der Justagezustand des Geräts z.B. permanent oder in vorgegebenen Intervallen verifiziert werden.

Bei einer Aufnahmeposition für ein Flüssigkeitsgefäß handelt es sich beispielsweise um eine Halterung oder Vertiefung, die das Flüssigkeitsgefäß wenigstens teilweise, bevorzugt dessen unteren Teil, formschlüssig umschließt und halten kann. Bevorzugt umfasst die Aufnahmeposition eine Wandung, die in Wechselwirkung mit dem Flüssigkeitsgefäß treten kann. Bevorzugt kann die Aufnahmeposition mittels einer Robotervorrichtung automatisch bewegt werden.

Ein geeignetes vorgegebenes Maß bezüglich der Abweichung der Krafteinwirkungen ist z.B. größer als eventuelle Ungenauigkeiten bei der Messung der Krafteinwirkungen. Vorteilhafterweise wird das vorgegebene Maß nur möglichst geringfügig größer als die Ungenauigkeiten bei der Messung der Krafteinwirkungen gewählt. So kann erreicht werden, dass der Justagezustand vergleichsweise genau ermittelt werden kann. Falls jedoch lediglich eine geringere Genauigkeit bezüglich der Ermittlung des Justagezustandes angestrebt wird, bzw. größere Fehler in der Justage toleriert werden können, kann das vorgegebenen Maß gegebenenfalls auch entsprechend größer gewählt werden. Dies kann den Vorteil haben, dass das Verfahren dann besonders robust und weniger fehleranfällig sein kann.

Eventuelle Ungenauigkeiten bei den Messungen der Krafteinwirkungen können verschiedenste Ursachen haben. Beispielsweise können sie als Folge von Unvollkommenheiten der Konstruktion und/oder der Fertigung des Sensors auftreten. Weiter können sie beispielsweise aufgrund von Änderungen von Einwirkungen aus der Umgebung auftreten. Solche Änderungen können sich z.B. auf die Temperatur, äußere elektromagnetische Felder, Vibrationen und/oder Erschütterungen beziehen. Die Ungenauigkeit einer Messung der Krafteinwirkung kann z.B. mittels Referenzmessungen unter entsprechenden Randbedingungen quantifiziert werden.

Weiter können Ungenauigkeiten aufgrund von statistischen Vorgängen auftreten, die z.B. zu entsprechendem Rauschen führen können. Die Ungenauigkeit einer Messung der Krafteinwirkung aufgrund statistischer Vorgänge kann z.B. durch mehrfache Wiederholung einer Messung und statistischer Analyse der Messergebnisse quantifiziert werden.

In einer bevorzugten Ausführung des Verfahrens zur Justierung der Transfervorrichtung bezüglich der Aufnahmeposition umfasst das Verfahren weiter die folgenden Schritte:
e) Verfahren des Flüssigkeitsgefäßes entlang eines Weges in der Aufnahmeposition in eine geänderte Position in der vorgegebenen Höhe in der Aufnahmeposition mit Hilfe des Transferarms, wobei der Weg in der vorgegebenen Höhe verläuft, und
f) Messung einer Mehrzahl von Krafteinwirkungen auf die Halterung mit aufgenommenen Flüssigkeitsgefäß mit Hilfe des Sensors entlang des Weges,
g) Ermittlung einer korrigierten Position mittels Auswertung des Verlaufs der in Schritt f) gemessenen Mehrzahl von Krafteinwirkungen entlang des Weges.

Dies hat den Vorteil, dass wenn es zu einer signifikanten Abweichung von einem ordnungsgemäßen Justagezustand kommt, eine entsprechende Korrektur des Justagezustandes unmittelbar erfolgen kann. Dies ist insbesondere auch im laufenden Betrieb des Analyzers möglich. Eine signifikante Abweichung von einem ordnungsgemäßen Justagezustand liegt z.B. vor, wenn die Abweichung für den Betrieb des Analyzers bedeutsam ist. Beispielsweise kann dies der Fall sein, wenn es aufgrund der Abweichung zu Fehlern und/oder Fehlfunktionen im Betrieb des Analyzers kommt oder die Wahrscheinlichkeit für das Auftrete solcher Ereignisse entsprechend erhöhte Werte annimmt.

In einer weiteren bevorzugten Ausführung des Verfahrens zur Justierung der Transfervorrichtung bezüglich der Aufnahmeposition umfasst das Verfahren weiter die folgenden Schritte:
h) Verfahren des Flüssigkeitsgefäßes in die korrigierte Position in der vorgegebenen Höhe in der Aufnahmeposition mit Hilfe des Transferarms,
i) Messung einer dritten Krafteinwirkung auf die Halterung mit aufgenommenen Flüssigkeitsgefäß mit Hilfe des Sensors,
j) Vergleich der in Schritt b) und Schritt i) gemessenen Krafteinwirkungen,
wobei, wenn die in Schritt b) und Schritt i) gemessenen Krafteinwirkungen nicht mehr als ein vorgegebenes Maß voneinander abweichen, die Transfervorrichtung bezüglich der Aufnahmeposition hinreichend justiert ist, und
wobei, wenn die in Schritt b) und Schritt i) gemessenen Krafteinwirkungen mehr als ein vorgegebenes Maß voneinander abweichen, eine weitere Justierung der Transfervorrichtung bezüglich der Aufnahmeposition durch Wiederholung der Schritte e) bis j) erfolgt.

Dies hat den Vorteil, dass die Überprüfung des Justagezustandes und eine eventuell notwendige Korrektur iterativ erfolgen können.

In einer weiteren bevorzugten Ausführung verläuft in Schritt e) der Weg entlang eines Freiheitsgrades oder entlang mehrerer verschiedener Freiheitsgrade.

In einer weiteren bevorzugten Ausführung wird das Verfahren für eine Mehrzahl von verschiedenen Freiheitsgraden sequenziell durchgeführt.

In einer weiteren bevorzugten Ausführung des Verfahrens handelt es sich bei dem Freiheitsgrad oder den Freiheitsgraden um transversale oder rotatorische Freiheitsgrade.

In einer weiteren bevorzugten Ausführung des Verfahrens wird das Verfahren für eine Mehrzahl von Aufnahmepositionen sequenziell durchgeführt.

In einer weiteren bevorzugten Ausführung des Verfahrens ist der Sensor an der Halterung und/oder dem Transferarm angeordnet.

In einer weiteren bevorzugten Ausführung des Verfahrens erfolgt in Schritt e) anstatt des Verfahrens des Flüssigkeitsgefäßes mit Hilfe des Transferarms eine Veränderung der Position der Aufnahmeposition.
In einer weiteren bevorzugten Ausführung des Verfahrens erfolgt in Schritt e) sowohl ein Verfahren des Flüssigkeitsgefäßes mit Hilfe des Transferarms als auch eine Veränderung der Position der Aufnahmeposition.
Bevorzugt erfolgt die Veränderung der Position der Aufnahmeposition mittels einer automatisch gesteuerten Robotervorrichtung.

In einer weiteren bevorzugten Ausführung des Verfahrens umfasst der Sensor einen Abstandsmesssensor. Ein Abstandsmesssensor kann einen Abstand zwischen zwei Gegenständen erfassen.

In einer weiteren bevorzugten Ausführung des Verfahrens umfasst der Abstandsmesssensor einen Hallsensor und einen Magneten.

Ein Hallsensor (auch Hall-Sonde oder Hall-Geber, nach Edwin Hall) nutzt den Hall-Effekt zur Messung von Magnetfeldern und Strömen oder zur Lageerfassung. Im Falle der erfindungsgemäßen Vorrichtung ist in einer bevorzugten Ausführungsform ein Magnet in der Halterung für das Flüssigkeitsgefäß eingelassen, dessen Magnetfeld von einem feststehenden Hallsensor gemessen wird. Da das Feld des Magneten am Ort des Hallsensors mit der Entfernung des Hallsensors vom Magneten abnimmt, kann aus dem Wert des Magnetfeldes am Ort des Hallsensors die Position des Magneten relativ zu dem Hallsensor und somit die Entfernung der Halterung für das Flüssigkeitsgefäß relativ zu dem Hallsensor berechnet werden.

Bevorzugt umfasst die Transfervorrichtung ein flexibles Zwischenelement.

Der Begriff "flexibles Zwischenelement" soll im Folgenden eine Einrichtung bezeichnen, die zwischen der Halterung und dem robotisch verfahrbaren Transferarm angebracht ist, die bei Krafteinwirkungen auf das Flüssigkeitsgefäß deformiert werden kann, gleichzeitig aber starr genug ist, so dass der Transferarm und die Halterung Küvetten aufnehmen, transportieren und abgeben können.

Bevorzugt ist vorgesehen, dass das flexible Zwischenelement aus einem elastischen und/oder dämpfenden Werkstoff wie zum Beispiel - aber nicht beschränkt auf - Elastomere, Urethangummi, Kautschuk, Gummi, Schaumstoff oder Federstahl besteht. Außerdem können auch mehrere separate Zwischenelemente neben- oder übereinander eingesetzt werden, um eine Verdrehsicherheit zu gewährleisten.

Das flexible Zwischenelement gewährleistet eine gewisse Auslenkbarkeit der Halterung gegenüber dem Transferarm bei einer Krafteinwirkung auf das Flüssigkeitsgefäß. Gleichzeitig begrenzt das flexible Zwischenelement durch z.B. seine Dicke und die elastischen Eigenschaften aber auch die Auslenkung des Greifers beim Transport des Gefäßes.

Der Begriff "Halterung" soll im Folgenden eine Einrichtung bezeichnen, die das Flüssigkeitsgefäß halten kann. Vorzugsweise kann die Halterung das Flüssigkeitsgefäß auch greifen, halten und wieder freigeben. Vorteilhaft ist dabei, wenn die Halterung einen einstückig gefertigten Greifer für das Flüssigkeitsgefäß aufweist. Die Halterung wird auch als Küvettenhalterung bezeichnet.

Grundsätzlich ist das Greifen eine Grundbewegung zum Erfassen und Halten und stellt die Verbindung zwischen Roboter bzw. Analysegerät und Werkstück, hier Flüssigkeitsgefäß, her. Ausschlaggebend für eine sichere Verbindung sind dabei die Art der Wirkpaarung und die Anzahl der Kontaktebenen. Die Wirkpaarung kann über Kraft-, Form- oder Stoffpaarung erzielt werden. Beim Einsatz einer Kraftpaarung wird der Halt durch das Ausüben eines Druckes auf die Werkstückoberfläche erzeugt. Im Gegensatz dazu erfolgt bei der Formpaarung das Halten über eine formgleiche Umschließung des Werkstücks. Dabei sind bei sicherer Führung die übertragenen Klemmkräfte sehr klein. Bei einer Stoffpaarung erfolgt der Kontakt mit dem Werkstück über die Ausnutzung der Adhäsion.

Des Weiteren lassen sich die Greifsysteme nach ihrer Wirkung in mechanische, pneumatische, magnetische und adhäsive Systeme unterteilen. Diese Wirkungen können zur größeren Flexibilität des Greifsystems auch kombiniert eingesetzt werden.

Bevorzugt werden im Rahmen dieser Erfindung mechanische Greifer, aber insbesondere auch magnetische Greifer sind verwendbar. Mechanische Greifer gibt es als Einfinger-, Zweifinger- oder Mehrfingergreifer in starrer, starrgelenkiger oder elastischer Ausführung.

Der hier bevorzugte Greifer ist aus einem Stück gefertigt. Dies ermöglicht eine reproduzierbare Fertigung von höheren Stückzahlen, da keine Einzelteile zusammengesetzt und der einwandfreie Betrieb des zusammengesetzten Greifers nur stichprobenartig - aber nicht bei jedem einzelnen Stück - überprüft werden muss.

Der einteilige Greifer ist elastisch verformbar ausgestaltet und ist in einem Spannzustand. Wird er mit ausreichender Kraft gegen ein Hindernis bewegt, kommt es zu einem Schnappeffekt und der Greifer geht auf. Durch weiteres Bewegen in Richtung des Hindernisses umschließt der Greifer das Hindernis und durch den Spannzustand schnappt er wieder zu, sobald das Hindernis komplett umschlossen ist. Zudem gibt der Greifer erst bei Überwindung einer Lösekraft, die notwendig ist, um den Greifer wieder zu öffnen, das umschlossene Hindernis wieder frei.

Während des Betriebs bewegt sich also z.B. die Halterung durch Seitwärtsbewegung bzw. Vor- oder Rückwärtsbewegung des Transferarms zunächst in Richtung eines Flüssigkeitsgefäßes . Dieses Flüssigkeitsgefäß, bei dem es sich vorzugsweise um eine Küvette handelt, steht z.B. in einer Aufnahmeposition. Bei Erreichen der Küvette wird die Halterung durch einen Küvettenflansch aufgedrückt und umschließt durch die Federwirkung des Kunststoffmaterials bzw. den Spannzustand bei weiterem Verfahren die Küvette. Nach dem Umschließen der Küvette kann die Küvette durch eine Aufwärtsbewegung der Halterung bzw. des Transferarms angehoben werden. Die Küvette wird nun gehalten und kann mittels Bewegung des Transferarms verfahren werden.

Zur Abgabe wird die Küvette in der Halterung durch Bewegung des Transferarms so in eine Aufnahmeposition gefahren, dass beim Zurückfahren der Halterung die Küvette in der Aufnahmeposition verbleibt, die Halterung wird also wieder aufgedrückt, gibt die Küvette frei und schließt sich danach wieder elastisch.

Ein weiterer Gegenstand der Erfindung ist ein automatisches Analysegerät umfassend mindestens eine an einem robotisch verfahrbaren Transferarm befestigte Transfervorrichtung mit einer Halterung für ein Flüssigkeitsgefäß, mindestens einen Sensor und mindestens ein Steuergerät, wobei die Transfervorrichtung mit Hilfe des Transferarms bewegt werden kann und wobei mit Hilfe des Sensors eine Krafteinwirkung auf die Halterung gemessen werden kann und wobei das Steuergerät so konfiguriert ist, dass es die Durchführung eines Verfahrens zur Justierung der Transfervorrichtung nach einem der vorhergehenden Ansprüche steuern kann.

In einer bevorzugten Ausführung umfasst das automatische Analysegerät eine Vielzahl von Aufnahmepositionen für ein Flüssigkeitsgefäß.

In einer weiteren bevorzugten Ausführung des Analysegeräts umfasst das Justagesystem eine Vielzahl von robotisch verfahrbaren Transferarmen.

Ein weiterer Gegenstand der Erfindung ist die Verwendung eines erfindungsgemäßen Verfahrens in einem automatischen Analysegerät.

Bei einem "robotisch verfahrbaren Transferarm" handelt es sich um einen mittels eines Antriebs automatisch verfahrbaren Transferarm. Der Transferarm kann also insbesondere aktiv, z.B. durch einen Elektromotor oder pneumatisch angetrieben, Bewegungen ausführen.

Der Transferarm ist z.B. Teil einer Roboterstation zur Behandlung, Manipulation und Analyse von chemischen, klinischen und/oder biologischen Proben. Dabei dient der Transferarm beispielsweise zum Transport von Flüssigkeitsgefäßen, wie z.B. Küvetten, von einer Pipettierstation zu einem Photometer oder einem PCR-Cycler.

Bevorzugt ist der Transferarm Teil eines Laborautomaten oder Laborsystems, beispielsweise für die Mikrobiologie, die Analytik, die Forensik oder die klinische Diagnostik.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Meßküvette handelt es sich beispielsweise um eine Küvette oder ein Reaktionsgefäß aus Glas, Kunststoff oder Metall. Vorteilhafterweise ist die Meßküvette aus optisch transparenten Materialien gefertigt, was besonders beim Einsatz von optischen Analyseverfahren vorteilhaft sein kann.

Die Begriffe "Meßküvette" und "Küvette" werden synonym verwendet.

### Die Erfindung wird anhand von Zeichnungen exemplarisch näher erläutert. Darin zeigen:

FIG 1 schematisch den Aufbau einer Transfervorrichtung (10) mit einer Halterung (12) für ein Flüssigkeitsgefäß (16), die mit Hilfe eines robotisch verfahrbaren Transferarms (11) bewegt werden kann,
FIG 2 und FIG 3 schematisch Messwerte einer Messung einer Mehrzahl von Krafteinwirkungen auf die Halterung mit aufgenommenen Flüssigkeitsgefäß.

### Gleiche Teile sind in allen Figuren mit denselben Bezugszeichen versehen.

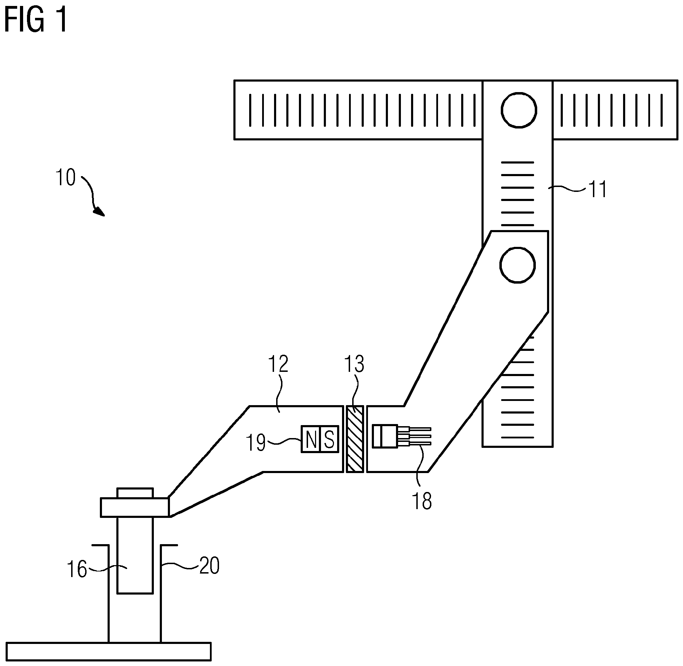

Die Transfervorrichtung (10) gemäß FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Die Transfervorrichtung (10) umfasst eine Halterung (12) für das Flüssigkeitsgefäß (16), die mit Hilfe eines robotisch verfahrbaren Transferarms (11) bewegt werden kann. Das Flüssigkeitsgefäß (16) befindet sich in einer vorgegebenen Höhe innerhalb einer Aufnahmeposition (20) für das Flüssigkeitsgefäß (16).

Bei einer derartigen Vorrichtung kann also durch Bewegen des Transferarms (11) die Küvettenhalterung (12) und damit auch die Küvette (16) innerhalb des Analysegeräts verfahren werden.

Die Vorrichtung weist ferner einen am Transferarm angeordneten, symbolhaft dargestellten Hallsensor (18) auf, der das von einem an der Küvettenhalterung (12) angeordneten Magneten (19) ausgehende Magnetfeld erfasst und insbesondere dessen Bewegungen messen und an eine nicht dargestellte Kontrolleinrichtung weitergeben kann. Dies ermöglicht die Messung von Krafteinwirkungen auf die Halterung mit aufgenommenem Flüssigkeitsgefäß mit Hilfe des Sensors (18) über eine Relativbewegung des Sensors (18) und der Küvettenhalterung (12).

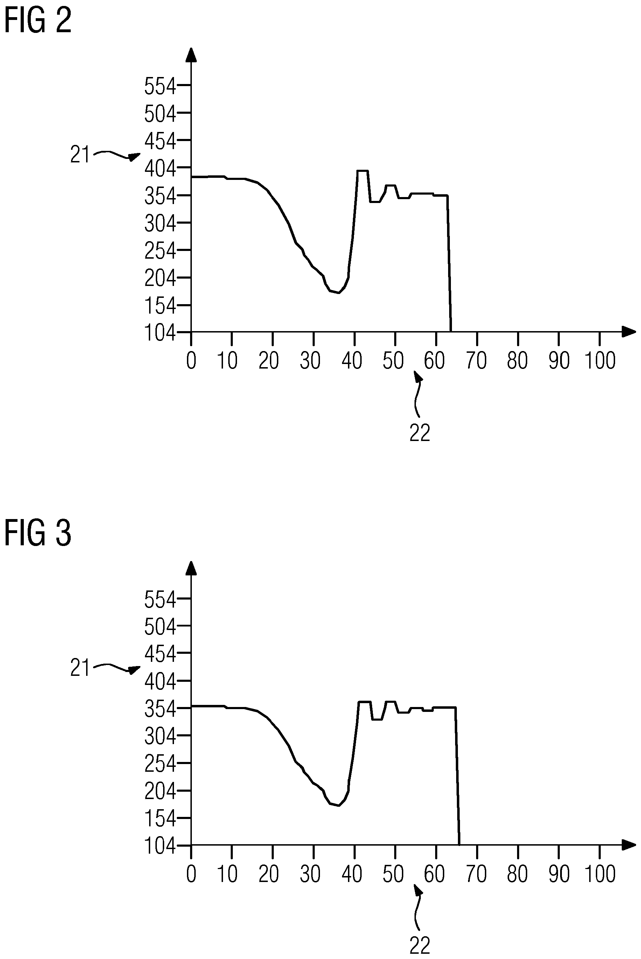

FIG 2 zeigt schematisch Messwerte einer Messung einer Mehrzahl von Krafteinwirkungen auf die Halterung (12) mit aufgenommenem Flüssigkeitsgefäß (16) mit Hilfe des Sensors (18). Aufgetragen ist ein Maß für die Krafteinwirkung (21) gegen die Position (22) der Halterung.

In einem Bereich von etwa 40 bis 62 der Position (22) befindet sich die Halterung (12) außerhalb der Aufnahmeposition (20). Aufgrund der Wechselwirkung des Flüssigkeitsgefäßes (16) und der Halterung (12) mit dem Schwerefeld der Erde werden in diesem Bereich der Position (22) mit dem Sensor (18) Krafteinwirkungen im Bereich von etwa 354 gemessen.

In einem Bereich von etwa 0 bis 15 der Position (22) befindet sich die Halterung (12) innerhalb einer Aufnahmeposition (20). Aufgrund der Wechselwirkung des Flüssigkeitsgefäßes (16) mit einer Wandung der Aufnahmeposition (20) werden in diesem Bereich der Position (22) mit dem Sensor (18) Krafteinwirkungen im Bereich von etwa 382 gemessen. Die erhöhte Krafteinwirkung im Bereich 0 bis 15 der Position (22) weicht mehr als ein vorgegebenes Maß von der Krafteinwirkung im Bereich von 40 bis 62 der Position (22) ab. Der Transferarm ist somit bezüglich der Aufnahmeposition nicht hinreichend justiert, so dass eine Justierung des Transferarms bezüglich der Aufnahmeposition erfolgt.

FIG 3 zeigt schematisch Messwerte einer Messung einer Mehrzahl von Krafteinwirkungen auf die Halterung (12) mit aufgenommenem Flüssigkeitsgefäß (16) mit Hilfe des Sensors (18). Aufgetragen ist ein Maß für die Krafteinwirkung (21) gegen die Position (22) der Halterung.

In einem Bereich von etwa 40 bis 62 der Position (22) befindet sich die Halterung (12) außerhalb der Aufnahmeposition (20). Aufgrund der Wechselwirkung des Flüssigkeitsgefäßes (16) und der Halterung (12) mit dem Schwerefeld der Erde werden in diesem Bereich der Position (22) mit dem Sensor (18) Krafteinwirkungen im Bereich von etwa 354 gemessen.

In einem Bereich von etwa 0 bis 15 der Position (22) befindet sich die Halterung (12) innerhalb einer Aufnahmeposition (20). Es findet keine signifikante Wechselwirkung des Flüssigkeitsgefäßes (16) mit einer Wandung der Aufnahmeposition (20) statt und es werden in diesem Bereich der Position (22) mit dem Sensor (18) Krafteinwirkungen im Bereich von ebenfalls etwa 354 gemessen. Die Krafteinwirkung im Bereich 0 bis 15 der Position (22) ist somit nicht erhöht gegenüber der Krafteinwirkung im Bereich 40 bis 62 der Position (22). Weiter weicht die Krafteinwirkung im Bereich 40 bis 62 der Position (22) nicht mehr als ein vorgegebenes Maß von der Krafteinwirkung im Bereich von 40 bis 62 der Position (22) ab. Der Transferarm ist somit bezüglich der Aufnahmeposition hinreichend justiert, so dass keine Justierung des Transferarms bezüglich der Aufnahmeposition erfolgt.

### Bezugszeichenliste

- 10: Transfervorrichtung
- 11: robotisch verfahrbarer Transferarm
- 12: Halterung
- 13: flexibles Zwischenelement
- 16: Flüssigkeitsgefäß
- 18: Sensor
- 19: Magnet
- 20: Aufnahmeposition
- 21: Krafteinwirkung
- 22: Position

## Patentansprüche

1. Verfahren zur Justierung einer an einem robotisch verfahrbaren Transferarm (11) befestigten Transfervorrichtung (10) mit einer Halterung (12) für ein Flüssigkeitsgefäß (16) in einem automatischen Analysegerät, wobei die Transfervorrichtung (10) mit Hilfe des Transferarms (11) bewegt werden kann, aufweisend die Schritte
a) Aufnahme eines Flüssigkeitsgefäßes (16) in die Halterung (12),
b) Messung einer ersten Krafteinwirkung (21) auf die Halterung (12) mit aufgenommenen Flüssigkeitsgefäß (16) mit Hilfe eines Sensors (18),
c) Verfahren des Flüssigkeitsgefäßes (16) in eine vorgegebene Position (22) in einer vorgegebenen Höhe in einer Aufnahmeposition (20) für das Flüssigkeitsgefäß (16) mit Hilfe des robotisch verfahrbaren Transferarms (11), und Messung einer zweiten Krafteinwirkung (21) auf die Halterung (12) mit aufgenommenen Flüssigkeitsgefäß (16) mit Hilfe des Sensors (18),
d) Vergleich der in Schritt b) und Schritt c) gemessenen Krafteinwirkungen (21),
wobei, wenn die in Schritt b) und Schritt c) gemessenen Krafteinwirkungen (21) nicht mehr als ein vorgegebenes Maß voneinander abweichen, die Transfervorrichtung (10) bezüglich der Aufnahmeposition (20) hinreichend justiert ist, und
wobei, wenn die in Schritt b) und Schritt c) gemessenen Krafteinwirkungen (21) mehr als ein vorgegebenes Maß voneinander abweichen, eine Justierung der Transfervorrichtung (10) bezüglich der Aufnahmeposition (20) erfolgt.

2. Verfahren nach Anspruch 1, weiter umfassend die folgenden Schritte zur Justierung der Transfervorrichtung (10) bezüglich der Aufnahmeposition (20):
e) Verfahren des Flüssigkeitsgefäßes (16) entlang eines Weges in der Aufnahmeposition (20) in eine geänderte Position (22) in der vorgegebenen Höhe in der Aufnahmeposition (20) mit Hilfe des Transferarms (11), wobei der Weg in der vorgegebenen Höhe verläuft, und
f) Messung einer Mehrzahl von Krafteinwirkungen (21) auf die Halterung (12) mit aufgenommenen Flüssigkeitsgefäß (16) mit Hilfe des Sensors (18) entlang des Weges,
g) Ermittlung einer korrigierten Position (22) mittels Auswertung des Verlaufs der in Schritt f) gemessenen Mehrzahl von Krafteinwirkungen (21) entlang des Weges.

3. Verfahren nach Anspruch 2, weiter umfassend die folgenden Schritte:
h) Verfahren des Flüssigkeitsgefäßes (16) in die korrigierte Position (22) in der vorgegebenen Höhe in der Aufnahmeposition (20) mit Hilfe des Transferarms (11),
i) Messung einer dritten Krafteinwirkung (21) auf die Halterung (12) mit aufgenommenen Flüssigkeitsgefäß (16) mit Hilfe des Sensors (18),
j) Vergleich der in Schritt b) und Schritt i) gemessenen Krafteinwirkungen (21),
wobei, wenn die in Schritt b) und Schritt i) gemessenen Krafteinwirkungen (21) nicht mehr als ein vorgegebenes Maß voneinander abweichen, die Transfervorrichtung (10) bezüglich der Aufnahmeposition (20) hinreichend justiert ist, und wobei, wenn die in Schritt b) und Schritt i) gemessenen Krafteinwirkungen (21) mehr als ein vorgegebenes Maß voneinander abweichen, eine weitere Justierung der Transfervorrichtung (10) bezüglich der Aufnahmeposition (20) durch Wiederholung der Schritte e) bis j) erfolgt.

4. Verfahren nach Anspruch 3, wobei in Schritt e) der Weg entlang eines Freiheitsgrades oder mehrerer verschiedener Freiheitsgrade verläuft.

5. Verfahren nach Anspruch 4, wobei das Verfahren für eine Mehrzahl von verschiedenen Freiheitsgraden sequenziell durchgeführt wird.

6. Verfahren nach einem der Ansprüche 4 oder 5, wobei es sich bei dem Freiheitsgrad oder den Freiheitsgraden um transversale oder rotatorische Freiheitsgrade handelt.

7. Verfahren nach einem der vorhergehenden Ansprüche, wobei das Verfahren für eine Mehrzahl von Aufnahmepositionen (20) sequenziell durchgeführt wird.

8. Verfahren nach einem der vorhergehenden Ansprüche, wobei der Sensor (18) an der Halterung (12) und/oder dem Transferarm (11) angeordnet ist.

9. Verfahren nach einem der Ansprüche 2 bis 8, wobei in Schritt e) anstatt des Verfahrens des Flüssigkeitsgefäßes (16) mit Hilfe des Transferarms (11) eine Veränderung der Position (22) der Aufnahmeposition (20) erfolgt.

10. Verfahren nach einem der Ansprüche 2 bis 8, wobei in Schritt e) sowohl ein Verfahren des Flüssigkeitsgefäßes (16) mit Hilfe des Transferarms (11) erfolgt als auch eine Veränderung der Position (22) der Aufnahmeposition (20) erfolgt.

11. Verfahren nach einem der vorhergehenden Ansprüche, wobei der Sensor (18) einen Abstandsmesssensor umfasst.

12. Verfahren nach Anspruch 11, wobei der Abstandsmesssensor einen Hallsensor und einen Magneten umfasst.

13. Automatisches Analysegerät umfassend mindestens eine an einem robotisch verfahrbaren Transferarm (11) befestigte Transfervorrichtung (10) mit einer Halterung (12) für ein Flüssigkeitsgefäß (16), mindestens einen Sensor (18) und mindestens ein Steuergerät, wobei die Transfervorrichtung (10) mit Hilfe des Transferarms (11) bewegt werden kann und wobei mit Hilfe des Sensors (18) eine Krafteinwirkung (21) auf die Halterung (12) gemessen werden kann,
**dadurch gekennzeichnet, dass** das Steuergerät so konfiguriert ist, dass es die Durchführung eines Verfahrens zur Justierung der Transfervorrichtung (10) nach einem der vorhergehenden Ansprüche steuern kann.

14. Automatisches Analysegerät nach Anspruch 13, wobei das automatische Analysegerät eine Vielzahl von Aufnahmepositionen (20) für ein Flüssigkeitsgefäß (16) umfasst.

15. Automatisches Analysegerät nach einem der Ansprüche 13 oder 14, wobei das Justagesystem eine Vielzahl von robotisch verfahrbaren Transferarmen (11) umfasst.

## Claims

1. Method for adjusting a transfer device (10) which is fastened to a robotically displaceable transfer arm (11) and comprises a holder (12) for a liquid vessel (16) in an automatic analysis appliance, wherein the transfer device (10) is able to be moved with the aid of the transfer arm (11), said method having the steps of:
a) receiving a liquid vessel (16) in the holder (12),
b) measuring a first force effect (21) on the holder (12), with the received liquid vessel (16), with the aid of a sensor (18),
c) displacing the liquid vessel (16) to a predetermined position (22) at a predetermined height in a receiving position (20) for the liquid vessel (16) with the aid of the robotically displaceable transfer arm (11), and measuring a second force effect (21) on the holder (12), with the received liquid vessel (16), with the aid of the sensor (18),
d) comparing the force effects (21) measured in step b) and step c),
wherein, if the force effects measured in step b) and step c) do not deviate from each other by more than a predetermined amount, the transfer device (10) is sufficiently adjusted with respect to the receiving position (20), and
wherein, if the force effects (21) measured in step b) and step c) deviate from each other by more than a predetermined amount, an adjustment of the transfer device (10) with respect to the receiving position (20) is carried out.

2. Method according to Claim 1, further comprising the following steps for adjusting the transfer device (10) with respect to the receiving position (20):
e) displacing the liquid vessel (16) along a path in the receiving position (20) to a modified position (22) at the predetermined height in the receiving position (20) with the aid of the transfer arm (11), wherein the path extends at the predetermined height, and
f) measuring a plurality of force effects (21) on the holder (12), with the received liquid vessel (16), along the path with the aid of the sensor (18),
g) determining a corrected position (22) by evaluating the profile of the plurality of force effects (21), measured in step f), along the path.

3. Method according to Claim 2, further comprising the following steps:
h) displacing the liquid vessel (16) to the corrected position (22) at the predetermined height in the receiving position (20) with the aid of the transfer arm (11),
i) measuring a third force effect (21) on the holder (12), with the received liquid vessel (16), with the aid of the sensor (18),
j) comparing the force effects (21) measured in step b) and step i),
wherein, if the force effects (21) measured in step b) and step i) do not deviate from each other by more than a predetermined amount, the transfer device (10) is sufficiently adjusted with respect to the receiving position (20), and wherein, if the force effects (21) measured in step b) and step i) deviate from each other by more than a predetermined amount, a further adjustment of the transfer device (10) with respect to the receiving position (20) is carried out by repeating steps e) to j).

4. Method according to Claim 3, wherein the path in step e) extends along one degree of freedom or a plurality of different degrees of freedom.

5. Method according to Claim 4, wherein the method is performed sequentially for a plurality of different degrees of freedom.

6. Method according to either of Claims 4 and 5, wherein the degree of freedom or the degrees of freedom are transverse or rotational degrees of freedom.

7. Method according to one of the preceding claims, wherein the method is performed sequentially for a plurality of receiving positions (21).

8. Method according to one of the preceding claims, wherein the sensor (18) is arranged on the holder (12) and/or the transfer arm (11).

9. Method according to one of Claims 2 to 8, wherein in step e) , instead of displacing the liquid vessel (16) with the aid of the transfer arm (11), the position (22) of the receiving position (20) is modified.

10. Method according to one of Claims 2 to 8, wherein in step e) the liquid vessel (16) is displaced with the aid of the transfer arm (11) and also the position (22) of the receiving position (20) is modified.

11. Method according to one of the preceding claims, wherein the sensor (18) comprises a distance-measuring sensor.

12. Method according to Claim 11, wherein the distance-measuring sensor comprises a Hall sensor and a magnet.

13. Automatic analysis appliance comprising at least one transfer device (10) which is fastened to a robotically displaceable transfer arm (11) and comprises a holder (12) for a liquid vessel (16), at least one sensor (18) and at least one controller, wherein the transfer device (10) is able to be moved with the aid of the transfer arm (11), and wherein a force effect (21) on the holder (12) is able to be measured with the aid of the sensor (18),
**characterized in that** the controller is configured to be able to control the performance of a method for adjusting the transfer device (10) according to one of the preceding claims.

14. Automatic analysis appliance according to Claim 13, wherein the automatic analysis appliance comprises a multiplicity of receiving positions (20) for a liquid vessel (16) .

15. Automatic analysis appliance according to either of Claims 13 and 14, wherein the adjustment system comprises a multiplicity of robotically displaceable transfer arms (11).

## Revendications

1. Procédé d'ajustage d'un système (10) de transfert, qui est fixé à un bras (11) de transfert déplaçable par robot et qui a une fixation (12) pour un récipient (16) à liquide dans un appareil d'analyse automatique, le système (10) de transfert pouvant être déplacé à l'aide du bras (11) de transfert, comprenant les stades
a) Réception d'un récipient (16) à liquide dans la fixation (12),
b) Mesure à l'aide d'un capteur (18) d'un premier effet (21) d'une force sur la fixation (12) alors que le récipient (16) à liquide s'y trouve,
c) Mise du récipient (16) à liquide dans une position (22) donnée à l'avance à un niveau donné à l'avance dans une position (20) de réception du récipient (16) à liquide à l'aide du bras (11) de transfert déplaçable par robot et mesure à l'aide du capteur (18) d'un deuxième effet (21) d'une force sur la fixation (12) alors que le récipient (16) à liquide s'y trouve,
d) Comparaison des effets (21) d'une force mesurée au stade b) et au stade c),
dans lequel, si les effets (21) d'une force mesurée au stade b) et au stade c) ne s'écartent pas l'un de l'autre de plus d'une mesure donnée à l'avance, le système (10) de transfert est ajusté suffisamment par rapport à la position (20) de réception, et
dans lequel, si les effets (21) d'une force mesurée au stade b) et au stade c) s'écartent l'un de l'autre de plus d'une mesure donnée à l'avance, un ajustage du système (10) de transfert par rapport à la position (20) de réception est effectué.

2. Procédé suivant la revendication 1, comprenant en outre les stades suivants pour l'ajustage du système (10) de transfert par rapport à la position (20) de réception :
e) Déplacement, à l'aide du bras (11) de transfert, du récipient (16) à liquide le long d'un trajet alors qu'il est dans la position (20) de réception pour le mettre dans une position (22) modifiée au niveau donné à l'avance dans la position (20) de réception, le trajet s'étendant au niveau donné à l'avance, et
f) Mesure le long du trajet à l'aide du capteur (18) d'une pluralité d'effets (21) d'une force sur la fixation (12) alors que le récipient (16) à liquide s'y trouve,
g) Détermination d'une position (22) corrigée au moyen de l'exploitation de la courbe des plusieurs effets (21) d'une force le long du trajet mesurés au stade f).

3. Procédé suivant la revendication 2, comprenant en outre les stades suivants :
h) Mise du récipient (16) à liquide dans la position (22) corrigée au niveau donné à l'avance dans la position (20 de réception à l'aide du bras (11) de transfert,
i) Mesure à l'aide du capteur (18) d'un troisième effet (21) d'une force sur la fixation (12) alors que le récipient (16) à liquide s'y trouve.
j) Comparaison des effets (21) d'une force mesurée au stade b) et au stade i),
dans lequel, si les effets (21) d'une force mesurée au stade b) et au stade i) ne s'écartent pas plus l'un de l'autre qu'une mesure donnée à l'avance, le système (10) de transfert est suffisamment ajusté par rapport à la position (20) de réception, et
dans lequel, si les effets (21) d'une force mesurée au stade b) et au stade i) s'écartent l'un de l'autre plus qu'une mesure donnée à l'avance, un autre ajustage du système (10) de transfert par rapport à la position (20) de réception est effectué par répétition des stades e) à j).

4. Procédé suivant la revendication 3, dans lequel au stade e) le trajet s'étend suivant un degré de liberté ou suivant plusieurs degrés de liberté différents.

5. Procédé suivant la revendication 4, dans lequel on effectue le procédé séquentiellement pour une pluralité de degrés de liberté différents.

6. Procédé suivant l'une des revendications 4 ou 5, dans lequel le degré de liberté ou les degrés de liberté sont des degrés de liberté transversaux ou de rotation.

7. Procédé suivant l'une des revendications précédentes, dans lequel on effectue le procédé séquentiellement pour une pluralité de positions (20) de réception.

8. Procédé suivant l'une des revendications précédentes, dans lequel le capteur (18) est monté sur la fixation (12) et/ou sur le bras (11) de transfert.

9. Procédé suivant l'une des revendications 2 à 8, dans lequel dans le stade e) au lieu de déplacer le récipient (16) à liquide à l'aide du bras (11) de transfert, on effectue une modification de la position (22) de la position (20) de réception.

10. Procédé suivant l'une des revendications 2 à 8, dans lequel dans le stade e) on effectue à la fois un déplacement du récipient (16) à liquide à l'aide du bras (11) de transfert et une modification de la position (22) de la position (20) de réception.

11. Procédé suivant l'une des revendications précédentes, dans lequel le capteur (18) comprend un capteur de mesure de distance.

12. Procédé suivant la revendication 11, dans lequel le capteur de mesure de distance est un capteur de Hall et comprend un aimant.

13. Appareil d'analyse automatique, comprenant au moins un système (10) de transfert, qui est fixé à un bras (11) de transfert déplaçable par robot et qui a une fixation (12) pour un récipient (16) à liquide, comprenant au moins un capteur (18) et au moins un appareil de commande, le système (10) de transfert pouvant être déplacé à l'aide du bras (11) de transfert et dans lequel, à l'aide du capteur (18), un effet (21) d'une force sur la fixation (12) peut être mesuré, **caractérisé en ce que** l'appareil de commande est configuré de manière à pouvoir commander l'exécution d'un procédé d'ajustage du système (10) de transfert suivant l'une des revendications précédentes.

14. Appareil d'analyse automatique suivant la revendication 13, dans lequel l'appareil d'analyse automatique comprend une pluralité de positions (20) de réception pour un récipient (16) à liquide.

15. Appareil d'analyse automatique suivant l'une des revendications 13 ou 14, dans lequel le système d'ajustage comprend une pluralité de bras (11) de transfert pouvant être déplacés par robot.
